# EUROPEAN PATENT APPLICATION

(11) **EP 4 663 942 A1**
(43) Date of publication of application: **17.12.2025**
(21) Application number: 24181651.1
(22) Date of filing: 12.06.2024
(51) Int. Cl.: F03D 1/06

(54) **A WIND TURBINE ROTOR BLADE WITH ROOT, MAIN AND TIP SECTIONS**

(71) Applicant: Nordex Energy SE & Co. KG, 22419 Hamburg (DE)
(72) Inventor: Dibbern, Adrian, 22419 Hamburg (DE); Zarochentsev, Alexander, 22419 Hamburg (DE)
(74) Representative: Hauck Patent- und Rechtsanwälte PartmbB

(57) **Abstract**

A wind turbine rotor blade comprising
• a root section having a blade root, an outer end and a root section length,
• a main section having an inner end, an outer end and a main section length,
• a tip section having an inner end, a blade tip and a tip section length,
• wherein the outer end of the root section and the inner end of the main section are configured to be connected to one another,
• the outer end of the main section and the inner end of the tip section each have a cross section shaped as an aerodynamic profile and are configured to be connected to one another and
• the outer end of the root section and the inner end of the main section have a circular cross section.

## Description

The invention relates to a wind turbine rotor blade comprising a root section, a main section and a tip section. An outer end of the root section and an inner end of the main section are configured to be connected to one another, and an outer end of the main section and an inner end of the tip section are configured to be connected to one another.

Wind turbine rotor blades are designed for maximum annual energy production, which requires a maximum blade length. The ever-growing dimensions of wind turbine rotor blades are becoming more and more incompatible with the available transport solutions, in particular by road or by train. Dividing wind turbine rotor blades into a plurality of longitudinal segments has been suggested in view of the difficulties to transport a wind turbine rotor blade manufactured in one piece. However, an extremely strong connection between adjacent segments is necessary in order to withstand the extreme loads, including peak loads and fatigue loads. Many different connection techniques have been investigated and evaluated against criteria such as aerodynamic performance, added mass and dynamic loads, lightning protection, secondary fatigue effects, space requirements, manufacturing options, and practicality in the field.

How well a certain type of connection performs regarding these criteria is largely affected by the position of the connection, and the implications on the optimal position are often contradictory. For example, near the blade tip, less space is available for receiving the respective connection means than is near the blade root. At the same time, negative impact on the aerodynamic performance may be more significant near the blade tip.

When considering the initial aim to facilitate transportation, still another perspective must be taken. This leads to a preference for blade segments of similar length.

A wind turbine rotor blade with the features of the preamble of claim 1 is known for example from document EP 2 631 478 A1. The known blade comprises three segments of roughly the same length.

Departing therefrom, it is an object of the invention to provide a wind turbine rotor blade offering a better compromise between simple construction and transportation requirements.

This object is solved by the wind turbine rotor blade with the features of claim 1. Preferred aspects are given in the dependent claims.

The wind turbine rotor blade comprises:
- a root section having a blade root, an outer end and a root section length,
- a main section having an inner end, an outer end and a main section length,
- a tip section having an inner end, a blade tip and a tip section length,
- wherein the outer end of the root section and the inner end of the main section are configured to be connected to one another,
- the outer end of the main section and the inner end of the tip section each have a cross section shaped as an aerodynamic profile and are configured to be connected to one another and
- the outer end of the root section and the inner end of the main section have a circular cross section.

The wind turbine rotor blade may be designed for a wind turbine having a rotor with an essentially horizontal axis. The wind turbine may be operated at variable rotor speed and at varying pitch angles. To this end, the wind turbine rotor may comprise one or more of the wind turbine rotor blades mounted to a rotor hub via a pitch bearing, so that the pitch angle can be controlled with a pitch drive. Typically, the wind turbine rotor will have two or three wind turbine rotor blades.

The wind turbine rotor blade has a blade root adapted for being mounted to a wind turbine rotor hub, for example by a bolted connection to a pitch bearing. The blade root may have a circular cross-section.

The terms "inner end" and "outer end" refer to a radial position with reference to a rotor axis, "inner" means "closer to the rotor axis/closer to the blade root" and "outer" means "further away from the rotor axis/closer to the blade tip." When the root section, the main section and the tip section are connected to each other, the three sections are aligned with a longitudinal axis of the wind turbine rotor blade. As the root section comprises the blade root and the tip section comprises the blade tip, all three sections together extend over the entire length of the complete wind turbine rotor blade.

The inner end of the tip section has a cross section shaped as an aerodynamic profile, which smoothly extends towards the blade tip, preferably over the entire tip section length. We note the tip section at its inner end may comprise connection means which may extend in a direction towards the blade root, for example received in the main section when the main section and the tip section are connected to one another. The same applies to the main section, which at its outer end may comprise connection means which extend in a direction towards the blade tip, for example received in the tip section. The feature on the cross sections of the outer end of the main section and of the inner end of the tip section being shaped as an aerodynamic profile refers to the cross sections of the wind turbine rotor blade when the main section and the tip section are connected to one another. The cross section of the outer end of the main section is arranged adjacent to or near the cross section of the inner end of the tip section, and both cross sections may be essentially identical, so that a smooth transition between the aerodynamic surfaces of the main section and the tip section is achieved.

Similar observations can be made with regard to the transition between the root section and the main section, whereas the cross sections of the outer end of the root section and the inner end of the main section are circular. The main section at its inner end may comprise connection means which may extend in the direction towards the blade root, for example received in the root section when the root section and the main section are connected to one another. The same applies to the root section, which at its outer end may comprise connection means which extend in the direction towards the blade tip, for example received in the main section. The cross sections of the outer end of the root section and of the inner end of the main section refer to the cross sections of the wind turbine rotor blade when the root section and the main section are connected to one another. The cross section of the outer end of the root section is arranged adjacent to or near the cross section of the inner end of the main section, and both cross sections may be essentially identical, so that a smooth transition between the outer surfaces of the root section and the main section is achieved. At this joint, however, this is less important than at the aerodynamically more relevant connection between the main section and the tip section, so that different diameters forming a step between the root section and the main section may be acceptable.

One of the advantages of the invention is that the connection between the root section and the main section due to the circular cross sections can be carried out in a very robust manner based on simple connection technology. Due to their circular cross sections, the outer end of the root section and the inner end of the main section will deform under load much less than if they had a more complex shape. In addition to the simplification achieved by the circular cross sections, the connection is also simple because it is located relatively close to the blade root, where the diameter is large and sufficient space is available. Added mass at this location also has relatively little influence on fatigue loads.

In an aspect, the root section has a circular cross section over its entire length. The diameter of the root section may be constant over the entire length, so that the root section has a simple, tubular shape. In the alternative, the diameter may vary over the root section length, such as in a smooth/continuous manner in a conical design, or possibly in a step-wise manner. In this aspect, the root section has a particularly simple design and can be manufactured at low costs.

In an aspect, the root section length is at least 5 % of a total blade length. The root section length may be in a range of for example 5% to 20 % of the total blade length, preferably in a range of 8 % to 15 % of the total blade length. In this aspect, the root section forms a substantial part of the wind turbine rotor blade.

In an aspect, the tip section length is the same as or smaller than the root section length and/or smaller than the main section length. In particular, the tip section length and the root section length can be selected such that the main section is the longest section, in particular longer than the root section and the tip section together. For example, the tip section length may be in a range of 5 % to 20 % of the total blade length and the root section length may be in a range of 5 % to 20 % of the total blade length. This leads to a main section length in a range of 60 % to 90 % of the total blade length, which is still very long, but may be manageable with respect to transportation. Remaining difficulties as to transportation of the main section may be outweighed by simple connection solutions: The connection between the root section and the main section is simplified by the circular cross section, as explained above, and the connection between the main section and the tip section is simplified by the fact that relatively low loads occur at the connection because the tip section is relatively short and lightweight.

In an aspect, the wind turbine rotor blade comprises a spar cap and/or a shear web having an outer end, wherein the tip section length is selected such that the outer end of the spar cap and/or shear web is arranged within the main section and the tip section does not comprise a spar cap and/or shear web. This solution is appropriate in particular in combination with a tip section length in the range of 5 % to 15 % of the total blade length. Then, sufficient stability can be provided to the tip section by the blade shell, so that an additional reinforcing structure such as a spar cap and/or shear web is not required. The spar cap and/or shear web arranged in the main section may extend up to the outer end of the main section and may be connected to a connection means used to form the connection with the tip section. However, the spar cap and/or shear web in the main section may also end in a distance from the outer end of the main section.

In further aspects, the tip section is manufactured as a single segment, the main section is manufactured as a single segment and/or the root section is manufactured as a single segment. "Manufactured as a single segment" means the respective segment is provided as a single part that cannot be disassembled into longitudinal sub-sections. The respective segment therefore must be transported in a single piece. Of course, the respective segment may have been assembled from different parts, for example by bonding two or more shell segments. In general, each of the sections may include any number of sub-segments. Manufacturing the respective section as a single segment avoids additional connections. In this regard, it is preferred to manufacture each of the three sections as a single segment, so that only two connections between adjacent segments are required.

In an aspect, the root section and the main section are connected by means of a different connection technology than the main section and the tip section. The different connection technologies, e.g. a detachable connection or inseparable connection can be chosen according to the bearable loads and the installation space at the different connection areas. In another example, the different connection technologies can be a detachable connection for both joints, but being another technical principle, e.g. a combination of a bolt connection having an intermediate connection piece and a bolt connection that connects the adjacent sections directly. In a further example, the different connection technologies can be an inseparable connection for both joints, but being another technical principle, e.g. a combination of directly adhesively bonded sections and by means of an intermediate connection piece adhesively bonded sections.

In an aspect, the outer end of the root section and the inner end of the main section or the outer end of the main section and the inner end of the tip section are configured to be connected to one another by a detachable connection, in particular by a bolted connection. For maintenance or repair as well as for replacing one of the sections, the connection can be detached. With a bolted connection, this is particularly easy by loosening and/or removing the bolts and/or corresponding nuts. The bolted connection can be implemented similar to a bolted connection between a blade root and a rotor hub, if desired with bolts or bushings embedded in the inner and/or outer end of the main section and/or in the inner end of the tip section. A flange with a corresponding number of through-holes receiving one bolt each can be formed at the outer end of the root section .

In an aspect, the outer end of the main section and the inner end of the tip section are configured to be connected to one another by an inseparable connection, in particular by a glued connection. It is then not possible to detach the tip section once it has been connected to the main section, but the connection can be carried out at little added mass and requires less space than a detachable connection.

In further aspects, the tip section and/or the main section and/or the root section are made of a fiber reinforced material. In particular, a load carrying structure and/or shell parts of the respective section can be made of a fiber reinforced material. Proven manufacturing techniques can be used, for example a vacuum infusion process.

In a further aspect, the root section can be made of a metal material. In this case, the root section can be a one-part-section or be assembled from a plurality of metal components by welding and/or riveting. As mentioned above, the root section may be manufactured based on a fiber reinforced material, which usually offers a good compromise between strength, weight and costs. However, in particular when the root section is tubular or conical, a metal design has many advantages, in particular because a strong joint may be formed at the outer end of the root section based on a metal flange.

In an aspect, the wind turbine rotor blade comprises a maximum chord located in the main section. This means the aerodynamically relevant portions of the rotor blade are placed in the main section (and also in the tip section), while the root section may not have an aerodynamic profile at all.

In an aspect, the wind turbine rotor blade comprises a portion having a flatback profile. This portion can be arranged within the main section, in particular near the inner end of the main section. Seen in cross section, the flatback profile comprises a flat portion at the trailing edge, the flat portion being arranged approximately perpendicular to a profile chord. In the tip section and in an outer part of the main section, an aerodynamic profile with a sharp trailing edge may be used.

In an aspect, the root section is assembled from at least two ring-shaped root segments. The at least two ring-shaped root segments may be connected with one other in a detachable or in an inseparable manner. Using two or more ring-shaped root segments allows to select a suitable number of segments to achieve the desired root section length.

In the following, the invention is explained with reference to an embodiment shown in drawings.
- Fig. 1: shows a wind turbine rotor blade in a schematic view on the pressure side,
- Fig. 2: shows the root section and a part of the main section of the wind turbine rotor blade of Fig. 1 in an exploded, perspective view, and
- Fig. 3: shows the tip section and a part of the main section of the wind turbine rotor blade of Fig. 1 in an exploded, perspective view.

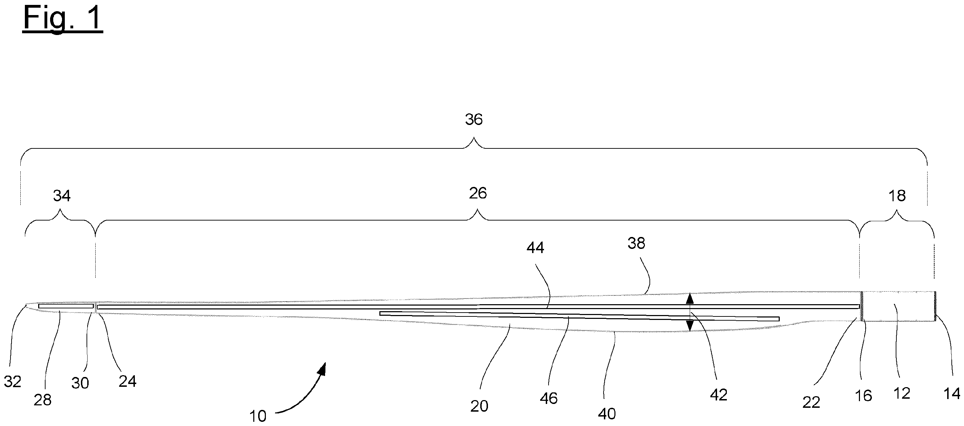

The wind turbine rotor blade 10 of Fig. 1 comprises a root section 12 having a blade root 14, an outer end 16 and a root section length 18, a main section 20 having an inner end 22, an outer end 24 and a main section length 26, and a tip section 28 having an inner end 30, a blade tip 32 and a tip section length 34. The wind turbine rotor blade 10 has a total blade length 36 of 100 m, which is the sum of the root section length 18 of 8 m, the tip section length 34 of 8 m and the main section length 26 of 84 m. The wind turbine rotor blade 10 has a leading edge 38 and a trailing edge 40.

The main section 20 includes a radial position where the wind turbine rotor blade 10 has its maximum chord 42. The wind turbine rotor blade 10 has two main spar caps 44, wherein the main spar cap 44 shown in Fig. 1 is integrated into a pressure side shell member and the other main spar cap (not shown) is integrated into a suction side shell member. The main spar caps 44 extend from the inner end 22 of the main section 20 to a radial position within the tip section 28 near the blade tip 32. In another embodiment not shown, a spar cap ends at the outer end 24 of the main section 20 and is not present in the tip section 28.

The main spar caps 44 are arranged at or near a chordwise position where the aerodynamic profile of the wind turbine 10 has its maximum height. A second pair of spar caps 46 extends over a central longitudinal part of the main section 20 only and is arranged at a chordwise position between the main spar caps 44 and the trailing edge 40.

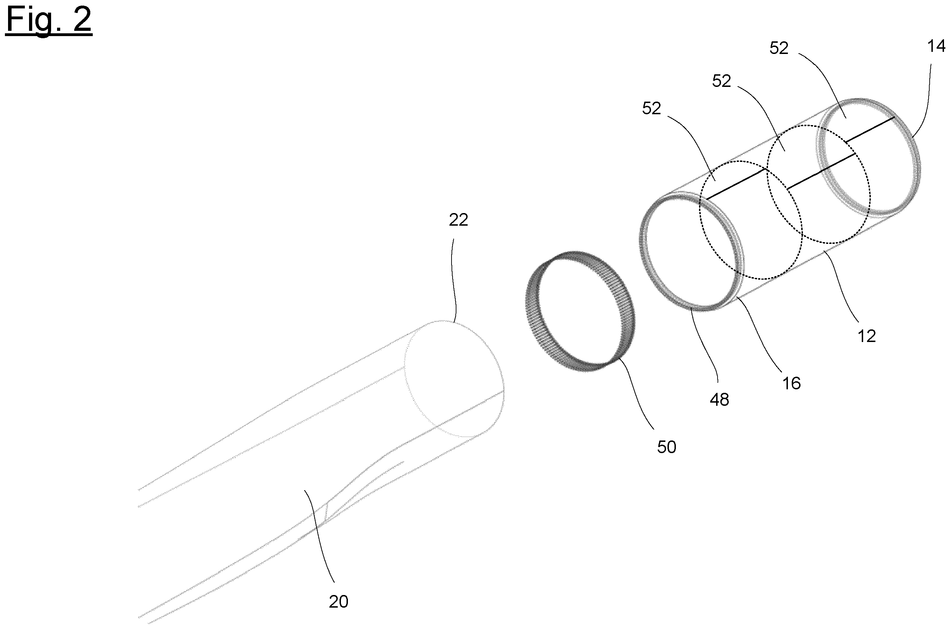

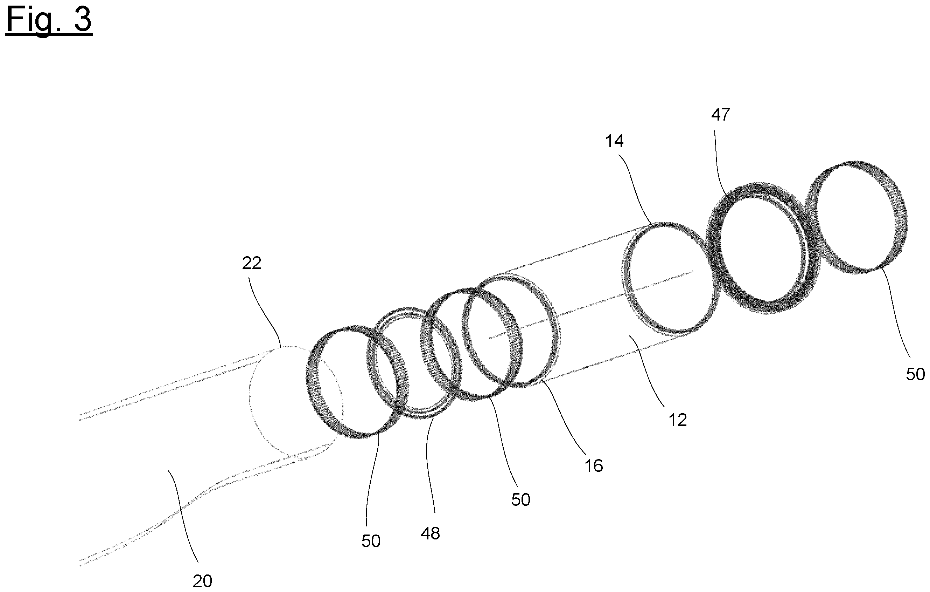

In Fig. 1, the outer end 16 of the root section 12 and the inner end 22 of the main section 20 are connected one another. The outer end 24 of the main section 20 and the inner end 30 of the tip section 28 are connected to one another. Details on these connections will be explained with reference to Fig. 2 and 3.

Fig. 2 shows an enlarged perspective view of the root section 12 to the right. The root section 12 has a circular cross section over its entire length, in particular at the outer end 16. The inner end 22 of the mains section 20 has a corresponding, circular cross section.

The root section 12 of the rotor blade is made of a metal material, e.g. steel. The blade root 14 of the root section 12 is adapted to be connected to a wind turbine rotor hub by means of bolted connection (not shown). To this end, the blade root 14 is provided with a flange which is facing to the front side and cannot be seen in Fig. 2. The outer end 16 of the root section 12 is also provided with a flange 48 which is facing inward and adapted to receive a number of bolts 50 locked behind the flange 48 by nuts (not shown). The other ends of the bolts 50 are received in a corresponding number of threaded bushings (not shown) which are embedded in the inner end 22 of the main section 20. In this way, a strong and detachable connection is achieved.

The root section 12 is manufactured as a single segment which comprises four ring-shaped segments 52. The ring-shaped segments 52 are steel components and are welded together to form the root section 12.

Fig. 3 shows an alternative embodiment of the root section 12. Again, the root section 12 has a circular cross section over its entire length, in particular at the outer end 16. The inner end 22 of the mains section 20 has a corresponding, circular cross section.

The root section 12 of the rotor blade is made of a fiber reinforced plastic material, e.g. glass fiber reinforced plastics. The blade root 14 of the root section 12 is adapted to be connected to a wind turbine rotor hub by means of bolted connection. To this end, the blade root 14 is provided with a separate metal flange which is assembled at the front side between the blade root 14 and the rotor hub (not shown). Alternatively, the root section 12 can be assembled directly to the rotor hub.

The outer end 16 of the root section 12 is also provided with a flange 48 which is facing inward. The flange 48 is assembled between the root section 12 and the main section 20. It is adapted to receive a number of bolts 50 from the root section 12 and the main section 20 locked behind the flange 48 by nuts (not shown). The other ends of the bolts 50 are received in a corresponding number of threaded bushings (not shown) which are embedded in the inner end 22 of the main section 20 and the outer 16 of the root section 12. In this way, a strong and detachable connection is achieved.

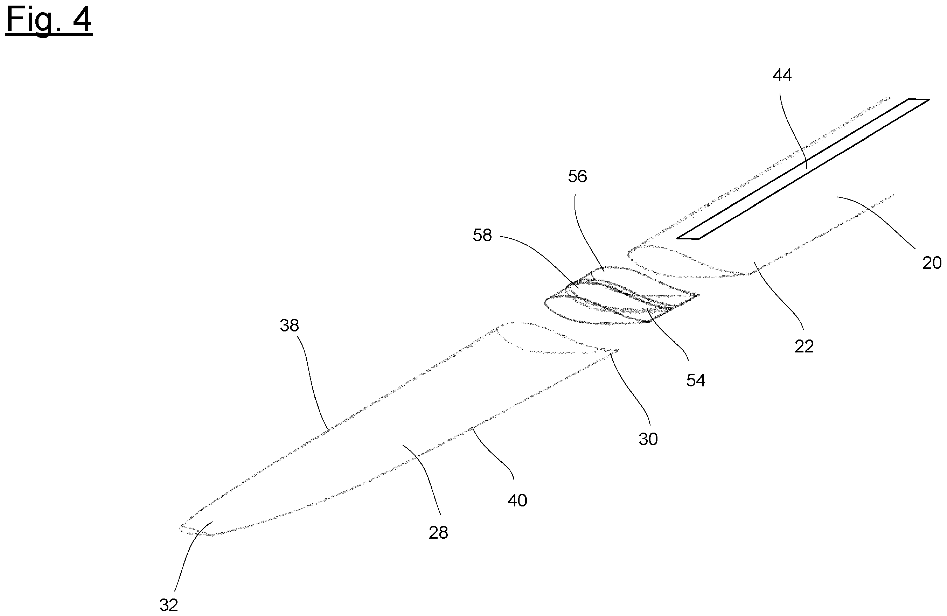

Fig. 4 shows an enlarged perspective view of the tip section 28 to the left, and, further to the right, a part of the main section 20 including its outer end 24. The outer end 24 of the main section 20 and the inner end 30 of the tip section 28 each have a cross section shaped as an aerodynamic profile. The spar cap 44 is arranged in the main section 20 and terminates close to the outer end 24.

A connector piece 54 which also has a cross section shaped as an aerodynamic profile is adapted to be received with a first end 56 in an opening within the outer end 24 of the main section 20 and with an opposing second end 58 in an opening within the inner end 30 of the tip section 28.

The first end 56, the second end 58 and the corresponding openings in the outer end 24 of the main section 20 and in the inner end 30 of the tip section 28 are adapted to be connected by glueing to form a strong, inseparable connection.

### List of reference numerals

- 10: wind turbine rotor blade
- 12: root section
- 14: blade root
- 16: outer end
- 18: root section length
- 20: main section
- 22: inner end
- 24: outer end
- 26: main section length
- 28: tip section
- 30: inner end
- 32: blade tip
- 34: tip section length
- 36: total blade length
- 38: leading edge
- 40: trailing edge
- 42: maximum chord
- 44: main spar cap
- 45: main shear web
- 46: spar cap
- 48: flange
- 50: bolt
- 52: ring-shaped segment
- 54: connector piece
- 56: first end
- 58: second end

## Claims

1. A wind turbine rotor blade (10) comprising
• a root section (12) having a blade root (14), an outer end (16) and a root section length (18),
• a main section (20) having an inner end (22), an outer end (24) and a main section length (26),
• a tip section (28) having an inner end (30), a blade tip (32) and a tip section length (34),
• wherein the outer end (16) of the root section (12) and the inner end (22) of the main section (20) are configured to be connected to one another and
• the outer end (24) of the main section (20) and the inner end (30) of the tip section (28) each have a cross section shaped as an aerodynamic profile and are configured to be connected to one another, **characterized in that**
• the outer end (16) of the root section (12) and the inner end (22) of the main section (20) have a circular cross section.

2. The wind turbine rotor blade (10) of claim 1, wherein the root section (12) has a circular cross section over its entire length.

3. The wind turbine rotor blade (10) of claim 1 or 2, wherein the root section length (18) is at least 5 % of a total blade length (36).

4. The wind turbine rotor blade (10) of any of the claims 1 to 3, wherein the tip section length (34) is the same as or smaller than the root section length (18) and/or smaller than the main section length (20).

5. The wind turbine rotor blade (10) of any of the claims 1 to 4, wherein the wind turbine rotor blade (10) comprises a spar cap (44) and/or shear web (45) having an outer end, wherein the tip section length (34) is selected such that the outer end of the spar cap (44) and/or shear web (45) is arranged within the main section (20) and the tip section (28) does not comprise a spar cap (44) and/or shear web (45).

6. The wind turbine rotor blade (10) of any of the claims 1 to 5, wherein the tip section (28) is manufactured as a single segment.

7. The wind turbine rotor blade (10) of any of the claims 1 to 6, wherein the main section (20) is manufactured as a single segment and/or wherein the root section (12) is manufactured as a single segment.

8. The wind turbine rotor blade (10) of any of the claims 1 to 7, wherein the root section (12) and the main section (20) are connected by means of a different connection technology than the main section (20) and the tip section (28).

9. The wind turbine rotor blade (10) of claims 8, wherein the outer end (16) of the root section (12) and the inner end (22) of the main section (20) or the outer end (24) of the main section (20) and the inner end (30) of the tip section (28) are configured to be connected to one another by a detachable connection, in particular by a bolted connection.

10. The wind turbine rotor blade (10) of claim 8, wherein the outer end (24) of the main section (20) and the inner end (30) of the tip section (28) are configured to be connected to one another by an inseparable connection, in particular by a glued connection.

11. The wind turbine rotor blade (10) of any of the claims 1 to 9, wherein the tip section (28) and/or the main section (20) are made of a fiber reinforced material.

12. The wind turbine rotor blade (10) of any of the claims 1 to 10, wherein the root section (12) is made of a fiber reinforced material and/or a metal material.

13. The wind turbine rotor blade (10) of any of the claims 1 to 11, wherein the wind turbine rotor blade (10) comprises a maximum chord (42) located in the main section (20).

14. The wind turbine rotor blade (10) of any of the claims 1 to 12, wherein the wind turbine rotor blade (10) comprises a portion having a flatback profile.

15. The wind turbine rotor blade (10) of any of the claims 1 to 13, wherein the root section (12) is assembled from at least two ring-shaped root segments (52).
